Europäisches Patentamt

European Patent Office

Office européen des brevets

(11) Veröffentlichungsnummer: **0 074 579 B1**

(12) **EUROPÄISCHE PATENTSCHRIFT**

(45) Veröffentlichungstag der Patentschrift:
06.11.85

(21) Anmeldenummer: 82108124.7

(22) Anmeldetag: 02.09.82

(51) Int. Cl.⁴: **A 01 D 67/00, A 01 D 34/00**

(54) **Rasenmäherchassis aus Stahlblech.**

(30) Priorität: 10.09.81 **DE 8126381 U**

(43) Veröffentlichungstag der Anmeldung:
**23.03.83 Patentblatt 83/12**

(45) Bekanntmachung des Hinweises auf die Patenterteilung:
**06.11.85 Patentblatt 85/45**

(84) Benannte Vertragsstaaten:
**AT BE CH FR IT LI NL SE**

(56) Entgegenhaltungen:
**US - A - 3 541 771
US - A - 4 258 539
US - A - 4 280 319**

(73) Patentinhaber: **Wolf-Geräte GmbH, Gregor-Wolf-Strasse
Postfach 860 und 880, D-5240 Betzdorf/Sieg (DE)**

(72) Erfinder: **Kolb, Walter, Martin-Luther-Strasse,
D-5240 Betzdorf/Sieg (DE)**

(74) Vertreter: **Koch, Günther, Dipl.-Ing. et al,
Kaufingerstrasse 8, D-8000 München 2 (DE)**

ACTORUM AG

**Beschreibung**

Die Erfindung bezieht sich auf ein Rasenmäherchassis aus Stahlblech, bestehend aus einem Windkanaloberteil und einem hiermit verbundenen Windkanalunterteil in Gestalt eines aufgerollten Ringes, wobei das Windkanaloberteil einen schraubenförmig hochgezogenen Windkanaltunnel und einen zentralen Stützflansch zur Lagerung des Motors aufweist. Ein solches Rasenmäherchassis ist aus der USA-A-3 541 771 bekannt. Hierbei ist der aus einem abgebogenen Blech bestehende Windkanal mit Schraubbolzen an dem den Stützflansch aufweisenden Chassis verschraubt, welches mehrteilig aus miteinander verschweissten oder verlöteten und entsprechend gebogenen Blechplatten besteht. Den unteren Abschluss bildet eine am Chassis verschraubte Blechplatte. Dies bedingt eine sehr arbeitsaufwendige und kostspielige Herstellung. Demgegenüber zeichnen sich andere bekannte Rasenmäher, deren Blechchassis im Tiefziehverfahren gefertigt ist, durch eine kostengünstige Fertigung aus. Allerdings sind der Verformung im Tiefziehverfahren Grenzen gesetzt und es ist daher nicht ohne weiteres möglich, ein Rasenmäherchassis mit hochgezogenem Windkanal im Tiefziehverfahren zu fertigen. Aus diesem Grunde wurden bisher Rasenmäherchassis mit hochgezogenem Windkanal im Spritzgussverfahren oder im Druckgussverfahren aus Metall oder Kunststoff gefertigt. Diese Herstellungsverfahren erfordern jedoch grosse und teure Formen, die wirtschaftlich nur in Verbindung mit hohen Stückzahlen einsetzbar sind. Zudem haftet den im Gussverfahren hergestellten Chassis der Nachteil einer relativ geringen Festigkeit an, und durch Stoss oder Schlag können Risse entstehen, was zum Abbrechen des beanspruchten Teiles führen und unter Umständen erhebliche Verletzungsgefahren nach sich ziehen kann.

Der Erfindung liegt die Aufgabe zugrunde, ein Rasenmäherchassis mit hochgezogenem Windkanal so auszubilden, dass es ausschliesslich aus Stahlblech im Tiefziehverfahren wirtschaftlich hergestellt werden kann und dabei einen steifen Aufbau und die erforderliche Verwindungssteifigkeit gewährleistet.

Gelöst wird die gestellte Aufgabe durch die im Kennzeichnungsteil des Patentanspruchs angegebenen Merkmale.

Das erste Kennzeichnungsmerkmal des Patentanspruchs ist zwar durch die US-A-4 280 319 bekannt, die einen Rasenmäher zeigt, bei welchem das Chassis aus einem flachen zylindrischen Blechgehäuse besteht, das den Windkanal umschliesst, so dass dieser nicht über die Oberseite vorsteht, so dass ziehtechnisch keine Probleme bestehen.

Durch den erfindungsgemässen Aufbau wird es jedoch möglich, auch ein Chassis mit hochgezogenem Windkanal im Tiefziehverfahren wirtschaftlich zu fertigen, denn die beiden nach der Erfindung getrennt gezogenen Teile nehmen nur eine begrenzte, im Tiefziehverfahren leicht zu beherrschende Höhe ein. Die Verschweissung der beiden Chassisteile und das Anschweissen der erforderlichen Radträger kann schnell und einfach erfolgen und durch diese Verbindungsmittel wird eine hohe Starrheit und Verwindungssteifigkeit erhalten.

Nachstehend wird ein Ausführungsbeispiel der Erfindung anhand der Zeichnung beschrieben. In der Zeichnung zeigen:

Fig. 1 eine perspektivische Ansicht eines erfindungsgemäss ausgebildeten Rasenmäherchassis,

Fig. 2 in grösserem Massstab einen Teilschnitt nach der Linie II-II gemäss Fig. 1 und

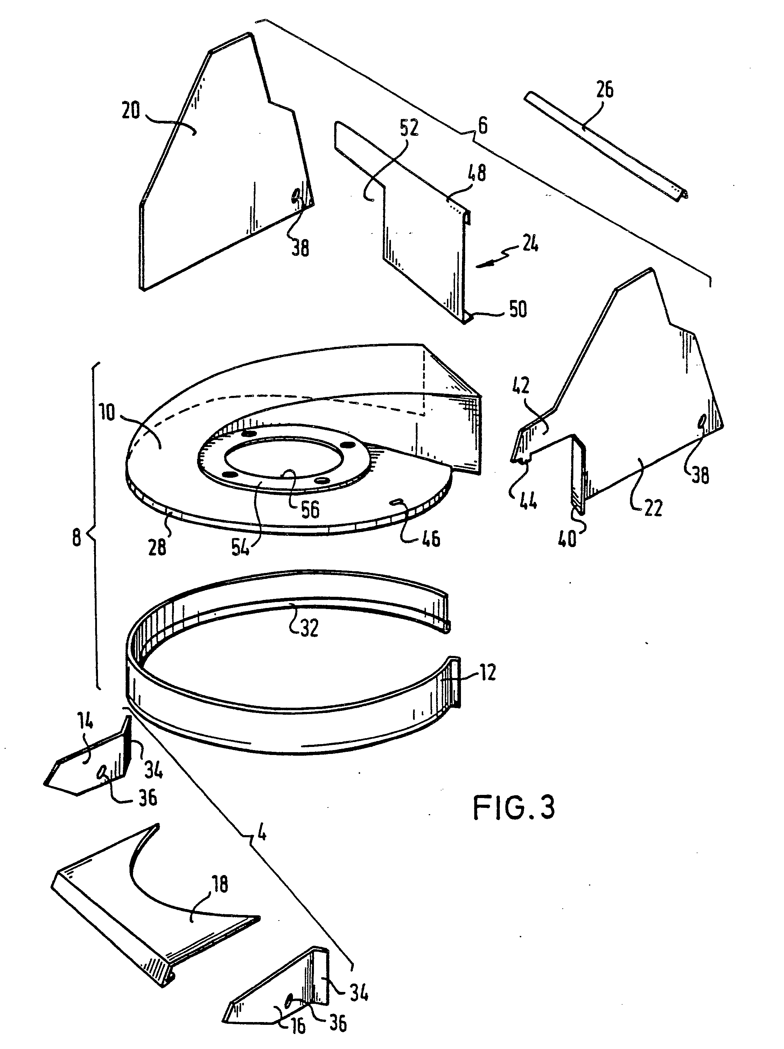

Fig. 3 ein Explosionsschaubild des Rasenmäherchassis gemäss Fig. 1, welches sämtliche Blecheinzelteile des Chassis erkennen lässt.

Das vollständig aus Stahlblech gefertigte Chassis für einen Rasenmäher mit senkrecht umlaufender Messerwelle besteht aus einem vorderen Radträger 4, einem hinteren Radträger 6 und einem dazwischen angeordneten, den Motor tragenden Windkanal-Chassis 8. Das Windkanal-Chassis 8 besteht aus einem Windkanaloberteil 10 und einem Windkanalunterteil 12 in Form eines gerollten Ringes, die beide als Ziehteil ausgeführt sind.

Der vordere Radträger 4 weist Seitenbleche 14 und 16 und ein oberes Abdeckblech 18 auf, die miteinander verschweisst sind.

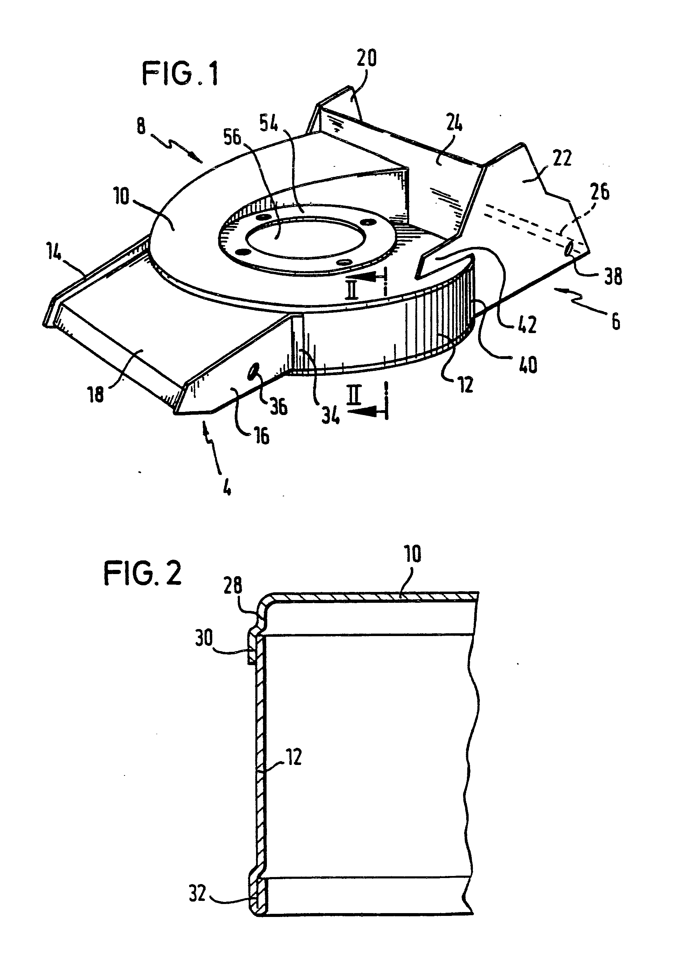

Der hintere Radträger 6 weist zwei Seitenbleche 20 und 22, eine Trennwand 24 und ein Distanzblech 26 auf. Das Windkanaloberteil 10 weist einen ringsumlaufenden nach unten abgebogenen Flansch 28 auf, der unten in einem nach unten versetzten Einfassrand 30 endet, der den gerollten Ring 12 des Windkanalunterteils in der aus Fig. 2 ersichtlichen Weise umschliesst. Der in zwei Zügen als Ziehteil hergestellte Ring 12 weist unten zur Versteifung und Vermeidung scharfer Kanten einen Bördelrand 32 auf. Oberteil 10 und Unterteil 12 sind längs des Flanschrandes 30 miteinander beispielsweise durch Punktverschweissung verbunden.

Die vorderen Seitenteile 14 und 16 sind mittels abgebogener Flanschen 34 an der Aussenseite des aufgerollten Ringes 12 angeschweisst. Diese Seitenteile tragen Löcher 36 zum Einsetzen der Radachsen bzw. einer Stellwelle, die über Kurbelarme die Radachsen höhenverstellbar aufnimmt. Entsprechende Löcher 38 für die Hinterradachsen finden sich in den Seitenblechen 20 und 22. Diese Seitenbleche 20 und 22 weisen ebenfalls abgewinkelte Schweissflansche 40 auf, mit denen sie an dem Ring 12 ansetzen. Ferner weist ein Seitenblech einen Stützarm 42 auf, der mit einem vorstehenden Finger 44 in einen Schlitz 46 des Windkanaloberteils 10 einsteht. Die zwischen den beiden Seitenblechen 20 und 22 verlaufende Trennwand 24 weist einen oberen Bördelrand 48 und einen unten abgewinkelten Flansch 50 auf. Am Auswurfende des Windkanals ist die Trennwand 24 mit einem dem Querschnitt des Windkanals entsprechenden Ausschnitt 52 versehen.

Das Windkanaloberteil bildet einen mittleren Ringflansch 54, der eine kreisrunde Öffnung 56 umschliesst, durch der vordere Teil des Motors mit seiner Welle hindurchsteht, der am Flansch 54 abgestützt und an diesem verschraubt ist.

Wie aus der Zeichnung ersichtlich, wird auf diese Weise ein Chassis geschaffen, das aus miteinander verschweissten Stahlblechteilen besteht und einen über die Chassishöhe allmählich hochgezogenen Windkanal aufweist, der im Hinblick auf den Schneidvorgang und den Auswurf des geschnittenen Grases optimal gestaltet ist.

**Patentanspruch**

Rasenmäherchassis aus Stahlblech, bestehend aus einem Windkanaloberteil (10) und einem hiermit verbundenen Windkanalunterteil (12) in Gestalt eines aufgerollten Ringes, wobei des Windkanaloberteil (10) einen schraubenförmig hochgezogenen Windkanaltunnel und einen zentralen Stützflansch (54) zur Lagerung des Motors aufweist, dadurch gekennzeichnet,

— dass an das von Windkanaloberteil (10) und angeschweisstem Windkanalunterteil (12) gebildete Windkanalchassis (8) zwei vordere Radträgerflansche (14, 16) und zwei hintere Radträgerflansche (20, 22) aus Blech angeschweisst sind,

— dass das tiefgezogene Windkanaloberteil (10) einen nach unten abgewinkelten Flansch (28) mit nach aussen versetztem Einlassrand (30) aufweist, der den aufgerollten Ring (12) des Unterteils umgreift,

— dass die vorderen Radträgerflansche (14, 16) durch ein aufgeschweisstes Abdeckblech (18) verbunden sind,

— dass die hinteren Radträgerflansche (20, 22) durch eine querverlaufernde Trennwand (24) versteift sind, die eine an den Auswurf des Windkanaltunnels anschliessende Auswurföffnung (52) aufweist,

— dass die hinteren Radträgerflansche (20, 22) durch ein im hinteren Teil angeordnetes V-förmig gebogenes Distanzblech (26) versteift sind, und

— dass der dem Windkanalausgang zugewandte hintere Radträgerflansch (20, 22) mit einem vorspringenden Arm (42) auf der Oberseite des Windkanaloberteils (10) an der tiefsten Stelle desselben liegt und über einen Finger (44) in einen Schlitz (46) desselben eingreift.

**Claim**

Lawnmower chassis comprising sheet steel, consisting of a wind passage upper part (10) and a wind passage lower part (12) connected thereto in the form of a rolled-up ring, the wind passage upper part (10) comprising a helically upwardly drawn wind passage tunnel and a central support flange (54) for mounting of the motor, characterized in

— that two front wheel support flanges (14, 16), and two rear wheel support flanges (20, 22) comprising sheet metal are welded to the wind passage chassis (8) formed by the wind passage upper part (10) and welded-on wind passage lower part (12),

— that the deep-drawn wind passage upper part (10) comprises a downwardly angled flange (28) with outwardly offset border edge (30) which engages round the rolled-up ring (12) of the lower part,

— that the front wheel support flanges (14, 16) are connected by a welded-on cover metal plate (18),

— that the rear wheel support flanges (20, 22) are stiffened by a transversely extending partition (24) which has an ejection opening (52) adjoining the ejection portion ot the wind channel tunnel,

— that the rear wheel support flanges (20, 22) are reinforced by a V-shaped bent spacer metal plate (26) disposed in the rear portion, and

— that the rear wheel support flange (20, 22) facing the wind passage outlet bears with a projecting arm (42) on the upper side of the wind passage upper part (10) at the lowest point thereof and via a finger (44) engages in a slot (46) thereof.

**Revendication**

Châssis de tondeuse à gazon en tôle d'acier, se composant d'une pièce supérieure de soufflerie (10) reliée à une pièce inférieure de soufflerie (12) constituée d'un anneau roulé, la pièce supérieure de la soufflerie (10) comportant un conduit de soufflerie orienté vers le haut et de forme hélicoïdale et une bride d'appui centrale (54) pour placement du moteur, caractérisé en ce que

— au châssis de soufflerie (8) composé d'un châssis supérieur de soufflerie (10) et un châssis inférieur de soufflerie (12) rapporté par soudure, deux flancs de support de roues avant (14, 16) et deux flancs de support de roues arrière (20, 22) sont rapportés par soudure,

— le châssis supérieur de soufflerie (10) obtenu par emboutissage profond comporte une collerette (28) rabattue vers le bas avec une bordure d'emboîtement déportée vers l'extérieur (30), qui reprend l'anneau cintré (12) de la pièce inférieure,

— les flancs de support de roues avant (14, 16) sont reliés à une tôle de protection (18) assemblée par soudure,

— les flancs de support de roues arrière (20, 22) sont rigidifiés par une paroi de séparation (24) située transversalement et qui présente une ouverture de rejet (52) adaptée au rejet de conduite de soufflerie,

— les flancs de support de roues arrière (20, 22) sont rigidifiés à leur partie arrière par une entretoise en tôle (26) plié en V,

— le flanc de support de roues arrière (20, 22) adapté sur la sortie de la soufflerie, repose sur la partie la plus basse de la face supérieure de la pièce supérieure de la soufflerie (10) grâce à une languette en saillie (42) et à un doigt (44) qui s'emboîte dans une fente (46).

FIG.1

FIG.2

FIG.3